# EUROPEAN PATENT SPECIFICATION

(11) **EP 4 496 149 B1**
(45) Date of publication and mention of the grant of the patent: **02.12.2026**
(21) Application number: 23769777.6
(22) Date of filing: 14.03.2023
(51) Int. Cl.: H01R 31/06, B60L 53/16, B60L 53/18, B60L 53/302, H01R 13/73

(54) **CONNECTOR ASSEMBLY HAVING SOLID-STATE COOLING MEDIUM, AND VEHICLE**
VERBINDERANORDNUNG MIT FESTKÖRPERKÜHLMITTEL UND FAHRZEUG
ENSEMBLE CONNECTEUR AYANT UN MILIEU DE REFROIDISSEMENT À SEMI-CONDUCTEURS, ET VÉHICULE

(30) Priority: 14.03.2022 CN 202210248419
(43) Date of publication of application: 22.01.2025
(73) Proprietor: Jilin Zhong Ying High Technology Co., Ltd., Jilin 130028 (CN)
(72) Inventor: WANG, Chao, Changchun, Jilin 130028 (CN)
(74) Representative: Habermann, Hruschka & Schnabel
(86) International application number: PCT/CN2023/081355
(87) International publication number: WO 2023/174275

(56) References cited:
- WO-A1-2013/013713
- CN-A- 112 670 022
- CN-A- 112 670 024
- CN-A- 113 871 066
- CN-A- 114 759 411
- CN-U- 213 781 626
- CN-U- 215 379 644
- CN-U- 215 911 237
- US-A1- 2015 030 878
- US-A1- 2017 144 558

## Description

### RELATED APPLICATION

The present disclosure claims priority to Chinese Patent Application No. 202210248419.3, entitled "connector assembly having solid-state cooling medium, and vehicle", and filed to the China National Intellectual Property Administration on March 14, 2022.

### TECHNICAL FIELD

The present disclosure relates to the technical field of vehicle electrical appliances, and particularly to a connector assembly having a solid-state cooling medium, and a vehicle.

### BACKGROUND

As new energy vehicles are increasingly popular, equipment and facilities for power transmission of the new energy vehicles have also been developed. Since a connector assembly on a new energy vehicle should meet the requirement of large-power motors, the transmission current is large, and the diameter of a high-voltage cable on the connector assembly also increases, such that the assembling on a vehicle body can only adopt manual mounting, which causes the wastes of a labor cost and a time cost.

In addition, during normal use, very large current flows through the high-voltage cable, such that a lot of heat is generated in both the high-voltage cable and attachment joints. A high temperature will occur due to excessive heat, and the connection position of the high-voltage cable and the surrounding connectors and fasteners will be failed due to the high temperature, which will affect the normal use of the connector assembly, resulting in short circuit and open circuit, and even the danger of electric shock that is life-threatening.

The high-voltage cable produces strong electromagnetic interference due to the large current. In order to reduce the influence of the electromagnetic interference, the high-voltage cable usually uses a shielding net to shield the electromagnetic interference. At present, the conventional shielding net is braided with metal wires, and it is necessary to add a shielding braiding machine in the cable production equipment, such that the equipment price is high and a large area is occupied, resulting in a high price of the shielding cable of the connector. In addition, the shielding technology for the connector is not perfect enough at present, such that the electrical appliances in the vehicle are interfered with and cannot be used. Conventional connector assemblies are known from the prior art, for example from WO2013013713A1, US20170144558A1, CN112670022A, CN213781626U, and CN112670024A.

Currently, there is no practical solution to the above problems. Therefore, the technical field of vehicle electrical appliances is in urgent need of a connector assembly with a small wire diameter and a low cable heat generation amount, which can realize automatic production and assembling.

### SUMMARY

The present disclosure aims to provide new technical solutions of a connector assembly having a solid-state cooling medium, and a vehicle. The connector assembly having a solid-state cooling medium of the present disclosure can reduce the failures of an electrical connection framework and a connection terminal caused by a high temperature during electrification, and improve the safety of the whole vehicle. The invention is defined in the independent claim.

According to a first aspect of the present disclosure, there is provided, among the other features of the independent claim, a connector assembly having a solid-state cooling medium, including at least one electrical connection framework and connectors. The connectors include connection terminals, and two ends of the electrical connection framework are electrically connected to the connection terminals respectively. The electrical connection framework is provided with at least one hollow inner cavity which is at least partially filled with a cooling medium in a solid or semi-solid state.

According to the invention, the electrical connection framework includes a rigid hollow conductor.

Optionally, the electrical connection framework is electrically connected to the connection terminal by means of welding or crimping.

Optionally, an outer contour of the electrical connection framework has a cross section of one or more selected from the group consisting of a circular shape, an elliptical shape, a rectangular shape, a polygonal shape, an A shape, a B shape, a D shape, an M shape, an N shape, an O shape, a P shape, an S shape, an E shape, an F shape, an H shape, a K shape, an L shape, a T shape, a U shape, a V shape, a W shape, an X shape, a Y shape, a Z shape, a semi-arc shape, an arc shape and a wavy shape.

Optionally, when the electrical connection framework is provided with one hollow inner cavity, the hollow conductor has a uniform wall thickness.

Optionally, a cross-sectional area of the hollow conductor is 0.3 mm² to 240 mm².

Optionally, a sum of cross-sectional area of the at least one hollow inner cavity accounts for 3.7% to 85% of a cross-sectional area of a circumscribed circle of the electrical connection framework.

Optionally, the connector further comprises a shielding inner shell which is made of a material containing conductive material.

Optionally, the shielding inner shell is made of a material containing metal or conductive plastic cement.

Optionally, the conductive plastic cement is a polymer material containing conductive particles, and the conductive particles are made of a material containing one or more selected from the group consisting of metal, conductive ceramics, a carbon-containing conductor, a solid electrolyte and a mixed conductor. The polymer material contains one or more selected from the group consisting of tetraphenyl ethylene, polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluoride, polyurethane, polyterephthalic acid, polyurethane elastomer, styrene block copolymer, perfluoroalkoxy alkane, chlorinated polyethylene, polyphenylene sulfide, polystyrene, cross-linked polyolefin, ethylene-propylene rubber, ethylene/vinyl acetate copolymer, chloroprene rubber, natural rubber, styrene butadiene rubber, nitrile rubber, silicone rubber, butadiene rubber, isoprene rubber, ethylene propylene rubber, chloroprene rubber, butyl rubber, fluororubber, polyurethane rubber, polyacrylate rubber, chlorosulfonated polyethylene rubber, epichlorohydrin rubber, chlorinated polyethylene rubber, chlorosulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, and polyoxymethylene resin.

Optionally, a material of the metal contains one or more selected from the group consisting of nickel, cadmium, zirconium, chromium, cobalt, manganese, aluminum, tin, titanium, zinc, copper, silver, gold, phosphorus, tellurium and beryllium.

Optionally, the carbon-containing conductor contains one or more selected from the group consisting of graphite powder, a carbon nanotube material, a graphene material, graphite silver or graphene silver.

Optionally, a transfer impedance of the shielding inner shell is less than 100 mΩ.

Optionally, an outer periphery of the electrical connection framework is sleeved with an insulation layer.

Optionally, an outer periphery of the electrical connection framework is sleeved with an insulation layer, and an outer periphery of the insulation layer is further sleeved with a shielding layer and an outer insulation layer.

Optionally, the shielding layer is electrically connected to the shielding inner shell.

Optionally, a cooling rate of the cooling medium to the electrical connection framework is 0.05 K/s to 10.3 K/s.

Optionally, the cooling medium is a heat-conductive tape, a heat-conductive insulation elastic rubber, a flexible heat-conductive pad, a heat-conductive filling agent or a heat-conductive insulation potting compound.

Optionally, the cooling medium is disposed on the outer periphery of the electrical connection framework by means of injection molding, extrusion molding, dipping molding, foaming, winding, weaving, pouring or wrapping.

Optionally, the cooling medium contains one or more selected from the group consisting of quartz glass, silicon carbide, mica, sand and gravel, diamond, silicon, graphene and derivatives thereof or silicone grease.

Optionally, a volume of the cooling medium in the hollow inner cavity accounts for more than 1.1% of a volume of the hollow inner cavity.

According to the invention, the cooling medium is unevenly distributed in the hollow inner cavity.

Optionally, one of the connectors is a charging cradle.

Optionally, a partial region of the electrical connection framework is flexible.

According to the invention, the electrical connection framework includes at least one bent portion.

According to a second aspect of the present disclosure, there is provided a vehicle, including the connector assembly having a solid-state cooling medium according to any one of the above embodiments.

The present disclosure has the following advantageous effects:
1. The connector assembly having a solid-state cooling medium according to the present disclosure can reduce the failure of the electrical connection framework and the connection terminal caused by the high temperature due to electrification, decrease the diameter of the electrical connection framework, prolong the service life of the connector and improve the safety of the whole vehicle.
2. The electrical connection framework is sleeved with the shielding layer, which not only constructs the cavity, but also serves as a shielding layer to effectively shield the electromagnetic interference generated by the electrification of the electrical connection framework.
3. The present disclosure solves the problem that the wire diameter of the high-voltage wire harness is large at present. The solid-state cooling medium addition technology is used to reduce the heat generation amount of the electrical connection framework, so that the electrical connection framework can conduct a large current with a small wire diameter.
4. The present disclosure solves the problem that the automatic production and assembling cannot be realized due to the use of flexible cables for the high-voltage wire harnesses at present. The automatic fitting and assembling of the high-voltage wire harness can be realized using the electrical connection framework which is at least partially rigid.
5. The present disclosure solves the problem of the low cooling efficiency of a liquid-cooled wire harness at present. The liquid-cooled wire harness is cooled through a liquid cooling pipe at present, while in the present disclosure, the cooling medium in solid state directly contacts the electrical connection framework, so that the temperature of the electrical connection framework can be quickly decreased, and a high current conduction can be realized.
6. The present disclosure solves the problem that the flexible cable contacts and rubs a vehicle shell, which cause the damage and short circuit of the insulation layer. The electrical connection framework can be arranged according to the shape of a vehicle body, while keeping a distance from the vehicle body to avoid rubbing the vehicle shell, thereby ensuring the service life of the electrical connection framework.
7. The connector is provided with a shielding inner shell therein, which can effectively prevent the electromagnetic interference generated by the terminal of the connector. The shielding inner shell made of conductive plastic can be integrally formed with the connector by means of integral injection molding, which saves the machining time, improves the production efficiency and reduces the production cost.
8. The electrical connection framework may include a flexible portion and a bent portion, so that the structure of the connector assembly can be reasonably designed according to the mounting environment of the vehicle body, which makes the mounting of the connector assembly on the vehicle body easier and saves the assembling time.

Other features and advantages of the present disclosure will become clear from the following detailed description of the exemplary embodiments of the present disclosure made with reference to the drawings.

### BRIEF DESCRIPTION OF THE DRAWINGS

The drawings, which are incorporated in and constitute a part of the specification, illustrate the embodiments of the present disclosure and together with the description, serve to explain the principles of the present disclosure.
FIG. 1 illustrates a structural schematic diagram of a connector assembly having a solid cooling medium according to the present disclosure.
FIG. 2 illustrates a cross-sectional view of an electrical connection framework according to a first embodiment of the present disclosure.
FIG. 3 illustrates a cross-sectional view of an electrical connection framework according to a second embodiment of the present disclosure.
FIG. 4 illustrates a cross-sectional view of an electrical connection framework according to a third embodiment of the present disclosure.
FIG. 5 illustrates a cross-sectional view of an electrical connection framework according to a fourth embodiment of the present disclosure.
FIG. 6 illustrates a structural schematic diagram of a connection between an electrical connection framework, a first connector and a second connector of a connector assembly having a solid cooling medium according to the present disclosure.

Reference numerals of the main components:
11-first connector; 12-second connector; 2-electrical connection framework; 3-hollow inner cavity; 4-shielding inner shell; 5-shielding layer; 14-insulation layer; 7-connection terminal; 13-outer insulation layer.

### DETAILED DESCRIPTION OF THE EMBODIMENTS

Various exemplary embodiments of the present disclosure will now be described in detail with reference to the drawings. It should be noted that the relative arrangements, the numerical expressions and the numerical values of components and steps set forth in these embodiments do not limit the scope of the present disclosure. The scope of protection conferred by the incident disclosure is defined by the appended claims.

The following description of at least one exemplary embodiment is merely illustrative and is in no way intended to limit the present disclosure or the application or the use thereof.

Technologies, methods and devices known to those of ordinary skill in the art may not be discussed in detail, but they should be regarded as parts of the specification under appropriate circumstances.

In all examples illustrated and discussed here, any specific value should be interpreted as illustrative only rather than limiting. Thus, other examples of the exemplary embodiments may have different values.

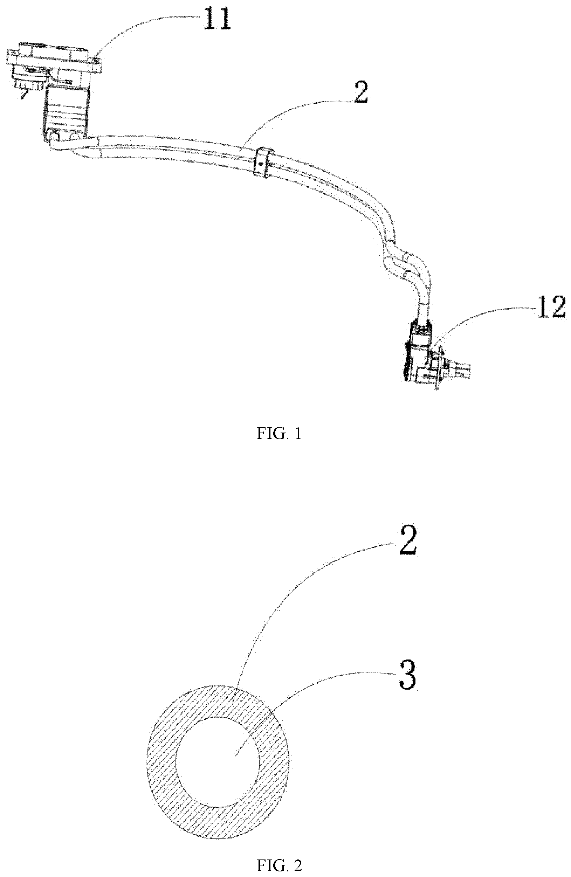

A connector assembly having a solid-state cooling medium, as illustrated in FIGS. 1 to 6, includes at least one electrical connection framework 2 and connectors. Each connector includes a connection terminal 7, and two ends of the electrical connection framework 2 are electrically connected to the connection terminals 7 respectively. The electrical connection framework 2 is provided with at least one hollow inner cavity 3 which is at least partially filled with a cooling medium in a solid or semi-solid state. In a specific embodiment, a connector assembly having a solid cooling medium may include two electrical connection frameworks 2. Correspondingly, the connectors may include a first connector 11 and a second connector 12 each of which includes the connection terminal 7, and two ends of each electrical connection framework 2 are electrically connected to the connection terminals 7 respectively. In some embodiments, one of the connectors is a charging cradle. The two ends of the electrical connection framework 2 are connected to one connector respectively. In some cases, one of the connectors (e.g., the first connector 11) may be a charging cradle, and the connector at the other end (e.g., the second connector 12) is charged through the electrical connection framework 2.

At present, the high-voltage cables on most of the connector assemblies use multi-core copper cables, which are heavy and expensive and become an obstacle to the popularization of new energy vehicles. In addition, although the multi-core cable is soft and can be easily machined and wired, the wire diameter is too large and the weight is heavy. During travelling of the vehicle, the cable will frequently rub a vehicle shell, thereby damaging the insulation layer of the cable and resulting in a high-voltage discharge, which will damage the vehicle or cause serious traffic accidents in severe cases.

Aluminum has become one of the main materials to replace the copper cable because the electrical conductivity of aluminum is second only to that of copper, and the aluminum resources have a large storage capacity and a low price. In addition, the multi-core cable structure may be replaced by the cable form of the electrical connection framework 2, such that the cable can be fixed on the vehicle shell, without rubbing the vehicle shell along with the vibration of the vehicle, thereby prolonging the service life of the connector assembly and reducing the accident rate.

However, since the electrical conductivity of the aluminum cable is not as good as that of the copper cable, it is necessary to increase the cross-sectional area of the cable to ensure the normal current value. As a result, the diameter of the aluminum cable is larger, which occupies a larger space during machining and mounting.

The electrical connection framework 2 is connected to the first connector 11 and the second connector 12, and the second connector 12 is connected to a vehicle-mounted battery, thereby completing an electrical transmission from the first connector 11 to the vehicle-mounted battery. When the vehicle is charged, the current flowing through the electrical connection framework 2 is very large, leading to a rapid increase in the temperature of the electrical connection framework 2. The electrical connection framework 2 is provided with at least one hollow inner cavity 3 which is least partially filled with the cooling medium in a solid or semi-solid state to cool the electrical connection framework 2, thereby reducing the temperature of the electrical connection framework 2 which generates heat, and enabling the connector assembly to work at a safe temperature. In addition, since the electrical connection framework 2 is provided with at least one hollow inner cavity 3, the electrical connection framework 2 may be made of a rigid hollow conductor material, so as to form the hollow inner cavity 3.

In some embodiments, as illustrated in FIG. 2, when the electrical connection framework is provided with one hollow inner cavity, the hollow conductor material has a uniform wall thickness.

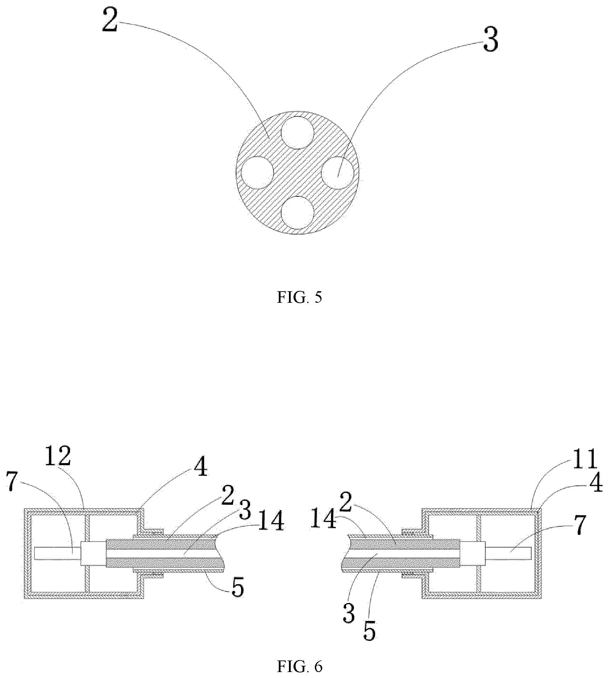

In some embodiments, the electrical connection framework 2 is provided with a plurality of hollow inner cavities 3 distributed in the electrical connection framework 2. Specifically, as illustrated in FIG. 5, the electrical connection framework 2 is provided with four hollow inner cavities 3, which are distributed in the electrical connection framework 2 along a circumferential direction. Exemplarily, the hollow inner cavities 3 may be uniformly distributed in the electrical connection framework 2. Of course, it can be understood that in other embodiments, the number of the hollow inner cavities 3 is not limited to four, and may be set according to actual needs.

Further, in some embodiments, a cross-sectional area of the hollow conductor material of the electrical connection framework 2 is 0.3 mm² to 240 mm². The cross-sectional area of the hollow conductor material of the electrical connection framework 2 determines the magnitude of the current that can be conducted by the electrical connection framework 2. Generally, the electrical connection framework 2 that realizes signal conduction has a small current and a small cross-sectional area. For example, a minimum cross-sectional area of the electrical connection framework 2 of the wires for signal transmission may be 0.3 mm². The electrical connection framework 2 that realizes power conduction has a large current and a large cross-sectional area. For example, a maximum cross-sectional area of a conductor of a vehicle battery wire harness may reach 240 mm².

In some embodiments, a sum of cross-sectional areas of the hollow inner cavities 3 accounts for 3.7% to 85% of a cross-sectional area of a circumscribed circle of the electrical connection framework 2. If the sum of the cross-sectional areas is too large, the electrical connection framework 2 has insufficient support, and if the sum of the cross-sectional areas is too small, the cooling effect will be insufficient. In order to select a reasonable sum of the cross-sectional areas of the hollow inner cavities 3, the inventor carries out relevant tests. The experimental method is to select the electrical connection frameworks 2 with different numbers of the hollow inner cavities 3, apply a force of 80 N to observe whether the electrical connection framework 2 is bent, and it is unqualified if bent. In a closed environment, the same current is conducted to the electrical connection frameworks 2 with different numbers of the hollow inner cavities 3, and a temperature rise less than 50K is a qualified value. The results are shown in Table 1.

**Table 1: Influence of a ratio of the sum of the cross-sectional areas of the hollow inner cavities 3 to the cross-sectional area of the circumscribed circle of the electrical connection framework 2 on the support to and the temperature rise of the electrical connection framework 2**

| Ratio of the sum of the cross-sectional areas of the hollow inner cavities 3 to the cross-sectional area of the circumscribed circle of the electrical connection framework 2 (%) | | | | | | | | | | | | |
|---|---|---|---|---|---|---|---|---|---|---|---|---|
| 2 | 2.5 | 3 | 3.5 | 3.7 | 4 | 15 | 30 | 45 | 60 | 70 | 85 | 88 |

| Whether the electrical connection framework 2 is bent | | | | | | | | | | | | |
|---|---|---|---|---|---|---|---|---|---|---|---|---|
| No | No | No | No | No | No | No | No | No | No | No | No | Yes |
| Temperature rise of the electrical connection framework 2 (K) | | | | | | | | | | | | |
| 52.2 | 51 | 50.5 | 50.2 | 48.2 | 45.8 | 38.5 | 37.1 | 33.2 | 30.9 | 27.5 | 27.4 | 27.4 |

As can be seen from Table 1, when the ratio of the sum of the cross-sectional areas of the hollow inner cavities 3 to the cross-sectional area of the circumscribed circle of the electrical connection framework 2 is less than 3.7%, the temperature rise of the electrical connection framework 2 is greater than 50K, which is unqualified. When the ratio of the sum of the cross-sectional areas of the hollow inner cavities 3 to the cross-sectional area of the circumscribed circle of the electrical connection framework 2 is greater than 85%, the electrical connection framework 2 will be deformed under the force of 80 N, which will easily lead to the leakage of the cooling medium. Thus, the inventor prefers that the ratio of the sum of the cross-sectional areas of the hollow inner cavities 3 to the cross-sectional area of the circumscribed circle of the electrical connection framework 2 is 3.7% to 85%.

In some embodiments, a cross-sectional shape of an outer contour of the electrical connection framework 2 is one or more selected from the group consisting of a circular shape, an elliptical shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

Specifically, one part of a cross section of the electrical connection framework 2 may be a circular structure, and the other part thereof may be an elliptical structure. The electrical connection framework 2 is specifically a rod conductor with a large diameter. In case of a narrow space during wiring, the design of the structure can better adapt to a wiring path of the vehicle without changing the power transmission effect. However, in the prior art, usually two different wires are used to match the vehicle body by means of adaption such as welding or crimping. Therefore, the design of the solution of the present disclosure effectively reduces the cost, better matches the contour of the vehicle body, simplifies the wiring process, reduces wiring consumables and improves the mounting efficiency.

In some embodiments, a partial region of the electrical connection framework 2 is flexible. The flexible material may be a multi-core cable, or a braided cable, or a soft bar formed with a plurality of layers of sheets which are stacked. The flexible material is easy to be bent and has excellent electrical conductivity; the sheet is soft, easy to be deformed and suitable to be used as a flexible conductor; and the stacking of the plurality of layers of sheets ensures not only the flexibility but also the electrification efficiency. The electrical connection framework 2 is formed by connecting the rigid material and the flexible material, so as to better fit the contour of the vehicle body and save the material and the space.

In some embodiments, the electrical connection framework 2 includes at least one bent portion. Therefore, the bent portion may be disposed according to the specific requirements in the wiring process, so as to facilitate the wiring by the operator.

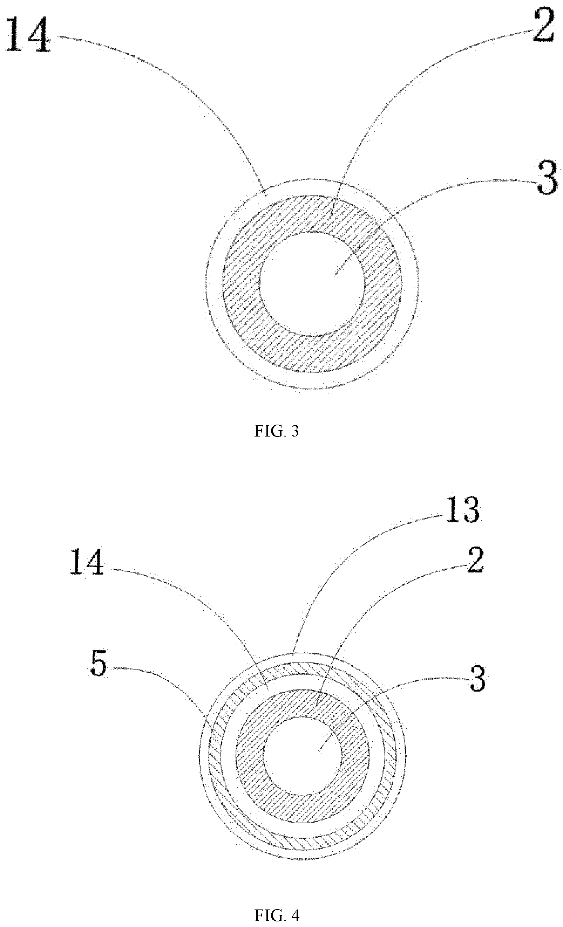

In some embodiments, as illustrated in FIG. 3, an outer periphery of the electrical connection framework 2 is sleeved with an insulation layer 14, which can prevent the contact and short circuit between the electrical connection framework 2 and the vehicle shell.

Further, as illustrated in FIG. 4, a shielding layer 5 and an outer insulation layer 13 are sequentially sleeved on an outer side of the insulation layer 14. The shielding layer 5 can reduce the interference of electromagnetic radiation generated by the electrical connection framework 2 to other electrical devices in the vehicle. Since the shielding layer 5 is made of a conductor and should be grounded, the insulation layer 14 is disposed between the shielding layer 5 and the electrical connection framework 2 to prevent a contact therebetween. The outer insulation layer 13 can prevent the contact and short circuit between the shielding layer 5 and the vehicle shell.

In some embodiments, the connectors (e.g., the first connector 11 and the second connector 12) further include a shielding inner shell 4 which is made of a conductive material. In order to reduce the influence of the electromagnetic interference, the conductive cable usually uses a shielding net to shield the electromagnetic interference. At present, the conventional shielding net is braided with metal wires, and a shielding braiding machine has to be added in the cable production equipment, such that the equipment price is high and a large area is occupied, resulting in a high price of the shielding cable of the connector. In the present disclosure, the shielding inner shell 4 made of a conductive material is electrically connected to the shielding layer 5 to form a complete shielding device. The shielding layer 5 is made of a rigid conductive material. Further, the material of the shielding layer 5 may be metal or conductive plastic cement. Therefore, the shielding inner shell 4 and the shielding layer 5 may have a shielding function to effectively shield the electromagnetic interference caused by the electrification of the electrical connection framework 2, thereby saving the use of the shielding net and reducing the cost of the connector assembly.

In some embodiments, the shielding inner shell 4 has a transfer impedance less than 100 mΩ. In order to verify the influence of different transfer impedances of the shielding inner shell 4 on the shielding effects, the inventor selects the electrical connection frameworks 2 with the same specification, the connectors with the same specification, the connection terminals 7 with the same specification, and the shielding inner shells 4 with different transfer impedances to make a series of samples, so as to test the shielding effects respectively. The experimental results are shown in Table 2. In this embodiment, the shielding performance value greater than 40dB is an ideal value.

The test method of the shielding performance value is to adopt a test instrument that outputs a signal value (which is a test value 2) to the electrical connection framework 2, and dispose a detection device which detects a signal value (which is a test value 1) outside the shielding inner shell 4. The shielding performance value = the test value 2 - the test value 1.

**Table 2: Influence of the transfer impedance of the shielding inner shell 4 on the shielding performance**

| Test parameter | Transfer impedance of the shielding inner shell 4 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 76 | 71 | 66 | 63 | 58 | 55 | 46 | 42 | 31 | 27 |

As can be seen from Table 2, when the transfer impedance of the shielding inner shell 4 is greater than 100 mΩ, the shielding performance value of the shielding inner shell 4 is less than 40 dB, which does not meet the requirement of the ideal value. When the transfer impedance of the shielding inner shell 4 is less than 100 mΩ, all of the shielding performance values of the shielding inner shell 4 meet the requirement of the ideal value, and the trend is increasingly better. Therefore, the inventor sets the transfer impedance of the shielding inner shell 4 to be less than 100 mΩ.

Further, the material of the shielding inner shell 4 contains metal or conductive plastic cement. The conductive plastic cement may be a polymer material containing conductive particles, and the conductive particles are made of a material containing one or more selected from the group consisting of metal, conductive ceramics, a carbon-containing conductor, a solid electrolyte and a mixed conductor. The material of the polymer material includes one or more selected from the group consisting of tetraphenyl ethylene, polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluoride, polyurethane, polyterephthalic acid, polyurethane elastomer, styrene block copolymer, perfluoroalkoxy alkane, chlorinated polyethylene, polyphenylene sulfide, polystyrene, cross-linked polyolefin, ethylene-propylene rubber, ethylene/vinyl acetate copolymer, chloroprene rubber, natural rubber, styrene butadiene rubber, nitrile rubber, silicone rubber, butadiene rubber, isoprene rubber, ethylene propylene rubber, chloroprene rubber, butyl rubber, fluororubber, polyurethane rubber, polyacrylate rubber, chlorosulfonated polyethylene rubber, epichlorohydrin rubber, chlorinated polyethylene rubber, chlorosulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, and polyoxymethylene resin.

The advantage of the conductive plastic cement is to facilitate the injection molding, and the user can select the shielding inner shell 4 made of an appropriate material as needed.

Further, the metal in the material of the conductive particles may contain one or more selected from the group consisting of nickel, cadmium, zirconium, chromium, cobalt, manganese, aluminum, tin, titanium, zinc, copper, silver, gold, phosphorus, tellurium and beryllium.

In order to verify the influence of different metal materials on the electrical conductivity of the shielding inner shell 4, the inventor makes samples of the shielding inner shell 4 with metal particles of the same size and different materials to test the electrical conductivity of the shielding inner shell 4. The experimental results are shown in Table 3. In this embodiment, the electrical conductivity of the shielding inner shell 4 greater than 99% is an ideal value.

**Table 3: Influence of metal particles with different materials on the electrical conductivity of the shielding inner shell 4**

| Metals of different materials | | | | | | | | | | | | | | | |
|---|---|---|---|---|---|---|---|---|---|---|---|---|---|---|---|
| Gold | Silver | Copper | Nickel | Titanium | Tin | Aluminum | Cadmium | Zirconium | Chromium | Cobalt | Manganese | Zinc | Tellurium | Beryllium | Palladium |
| Electrical conductivity of the shielding inner shell 4 (%) | | | | | | | | | | | | | | | |
| 99.8 | 99.9 | 99.8 | 99.5 | 99.5 | 99.5 | 99.6 | 99.3 | 99.2 | 99.2 | 99.4 | 99.5 | 99.3 | 99.4 | 99.4 | 99.2 |

As can be seen from Table 3, the electrical conductivity of the conductive plastic made of different selected metal particles is within the range of the ideal value. In addition, phosphorus is a non-metallic material and cannot be directly used as the material of the conductive plating, but it can be added to other metal to form an alloy to improve the conductive and mechanical properties of the metal itself. Therefore, the inventor sets that the material of the metal particles contains one or more selected from the group consisting of nickel, cadmium, zirconium, chromium, cobalt, manganese, aluminum, tin, titanium, zinc, copper, silver, gold, phosphorus, tellurium and beryllium.

Further, the carbon-containing conductor in the material of the conductive particles may contain one or more selected from the group consisting of graphite powder, a carbon nanotube material, a graphene material, graphite silver, or graphene silver.

The graphite powder is a mineral powder with the main component of carbon, which is soft and dark gray and is a very good nonmetallic conductive substance. The carbon nanotube has good electrical conductivity, with a structure the same as the lamellar structure of graphite, so it has good electrical properties. Graphene, graphite silver and graphene silver have extremely high electrical properties. The carbon-containing conductor containing these three materials has high electrical conductivity and good shielding performance, which can well realize the electromagnetic shielding of the electrical connection framework 2.

In some embodiments, the connection terminal 7 is made of copper or copper alloy, the electrical connection framework 2 is made of aluminum or aluminum alloy, and the electrical connection framework 2 is electrically connected to the connection terminal 7 by means of welding or crimping.

Copper or copper alloy has high electrical conductivity and friction resistance, and at present, the power connection parts of most of the electrical devices are made of copper, so it is necessary to use the connection terminal 7 made of copper or copper alloy for plug-in connection, and the connection terminal 7 can be widely used in various electrical transmission scenarios.

The electrical connection framework 2 made of aluminum or aluminum alloy has the advantages of good rigidity, light weight and high transmission efficiency, and is especially suitable for the transmission of large current.

The connection terminal 7 and the electrical connection framework 2 are connected by welding. The welding modes, which include one or more selected from the group consisting of resistance welding, friction welding, ultrasonic welding, arc welding, laser welding, electron beam welding, pressure diffusion welding and magnetic induction welding, use the concentrated heat energy or pressure to achieve a fusion connection at the contact positions of the connection terminal 7 and the electrical connection framework 2, such that the connection by welding is stable.

In addition, the metal inertia of copper is greater than that of aluminum, and an electrode potential difference between copper and aluminum is 1.9997 V. An electrochemical reaction will occur when the two metals are connected and electrified, which will lead to a gradual oxidation of aluminum wires, reducing the mechanical strength and the electrical conductivity of aluminum wires. Dissimilar materials can be connected by welding, and the conductive effect is better since the contact positions are fused.

The resistance welding refers to a method of welding by passing strong current through a contact point that is between an electrode and a workpiece, to generate heat by a contact resistance.

The friction welding refers to a method of welding by using the heat generated by the friction between the contact surfaces of the workpieces as a heat source, to make the workpieces be plastically deformed under pressure.

The ultrasonic welding is to transmit high-frequency vibration waves to surfaces of two to-be-welded objects, so that the surfaces of the two objects rub against each other under pressure to form a fuse molecular layer.

The arc welding is to convert electric energy into heat energy and mechanical energy that are needed for welding by using electric arc as a heat source and using the physical phenomenon of air discharge, so as to connect metals. The arc welding mainly includes shielded metal arc welding, submerged arc welding and gas shielded welding, etc.

The laser welding is an efficient and precise welding method that uses a laser beam with high energy density as a heat source.

The friction welding refers to a method of welding by using the heat generated by the friction between the contact surfaces of the workpieces as a heat source, to make the workpieces be plastically deformed under pressure.

The electron beam welding method refers to a method of using accelerated and focused electron beam to bombard the welding surface that is placed in vacuum or non-vacuum, to melt the welded workpiece to realize welding.

The pressure welding method is a method of applying pressure to weldments to make binding surfaces of them be in close contact and generate a certain plastic deformation to complete the welding.

The magnetic induction welding refers to that that two to-be-welded workpieces are instantaneously collided with each other at high speed under the action of a strong pulsed magnetic field, so that under the action of high pressure waves, the atoms of the two materials on the material surfaces of the two workpieces can meet within interatomic distance, thus forming a stable metallurgical bond at the interface. The magnetic induction welding is a type of solid-state cold welding that can weld conductive metals with similar or dissimilar properties. The crimping is a production process in which the electrical connection framework 2 and the connection terminal 7 are assembled and then stamped into a whole using a crimping machine. The crimping has the advantage of mass production, and by adopting an automatic crimping machine, products with a stable quality can be rapidly manufactured in large quantities.

In some embodiments, the shielding layer 5 is electrically connected to the shielding inner shell 4 by crimping or welding. Aluminum or aluminum alloy has good electrical conductivity, light weight and low price. The shielding inner shell 4 made of aluminum or aluminum alloy can achieve a good shielding effect and prevent the electromagnetic radiation of the connection terminal 7 and the electrical connection framework 2 from affecting other devices.

The crimping is a production process in which the shielding inner shell 4 and the shielding layer 5 are assembled and then stamped into a whole using a crimping machine. The crimping has the advantage of mass production, and by adopting an automatic crimping machine, products with a stable quality can be rapidly manufactured in large quantities.

The welding mode is substantially the same as that for the connection terminal 7 and the electrical connection framework 2, and will not be described in detail.

In some embodiments, a cooling rate of the cooling medium to the electrical connection framework 2 is 0.05 K/s to 10.3 K/s. In order to verify the influence of the cooling rate of the cooling medium on the temperature rise of the electrical connection framework 2, the inventor selects ten electrical connection frameworks 2 with the same cross-sectional area, the same material and the same length and conducts the same current thereto, cools the electrical connection frameworks 2 with the cooling media of different cooling rates, reads and records the temperature rise of each of the electrical connection frameworks 2 in Table 4.

The experimental method is to conduct the same current, in a closed environment, to each of the electrical connection frameworks 2 which adopts the cooling media of different cooling rates, record a temperature before the current conduction and a stable temperature after the current conduction, and take an absolute value of a difference therebetween. In this embodiment, a temperature rise less than 50 K is a qualified value.

**Table 4: Influence of different cooling rates of the cooling media on the temperature rise of the electrical connection framework 2**

| Cooling rate of the cooling medium (K/min) | | | | | | | | | | | | |
|---|---|---|---|---|---|---|---|---|---|---|---|---|
| 0.01 | 0.03 | 0.05 | 0.1 | 0.5 | 1 | 2 | 4 | 6 | 9 | 9.5 | 10.3 | 11.1 |

| Temperature rise of the electrical connection framework 2 (K) | | | | | | | | | | | | |
|---|---|---|---|---|---|---|---|---|---|---|---|---|
| 63.0 | 54.5 | 49.6 | 45.7 | 44.1 | 43.5 | 41.4 | 37.7 | 33.3 | 30.9 | 28.5 | 27.5 | 27.4 |

As can be seen from Table 4, when the cooling rate of the cooling medium is less than 0.05 K/s, the temperature rise of the electrical connection framework 2 is unqualified, and the temperature rise of the electrical connection framework 2 decreases as the cooling rate increases. However, when the cooling rate of the cooling medium is greater than 10.3 K/s, the temperature rise of the electrical connection framework 2 is not obviously decreased, and a higher cooling rate means a higher price and a more complicated process, so the inventor sets the cooling rate of the cooling medium as 0.05 K/s to 10.3 K/s.

In some embodiments, a volume of the cooling medium in the hollow inner cavity 3 accounts for more than 1.1% of a volume of the hollow inner cavity 3. In order to verify the influence of the volume of the cooling medium on the temperature rise of the electrical connection framework 2, the inventor selects ten electrical connection frameworks 2 with the same cross-sectional area, the same material and the same length and conducts the same current thereto, cools the electrical connection frameworks 2 with the cooling media of different volumes, reads and records the temperature rise of each of the electrical connection frameworks 2 in Table 5.

The experimental method is to conduct the same current, in a closed environment, to each of the electrical connection frameworks 2 which adopts the cooling media of different volumes, record a temperature before the current conduction and a stable temperature after the current conduction, and take an absolute value of a difference therebetween. In this embodiment, a temperature rise less than 50 K is a qualified value.

**Table 5: Influence of different volumes of the cooling media on the temperature rise of the electrical connection framework 2**

| Ratio of the volume of the cooling medium in the hollow inner cavity 3 to the volume of the hollow inner cavity 3 (%) | | | | | | | | | | | | |
|---|---|---|---|---|---|---|---|---|---|---|---|---|
| 0.5 | 0.6 | 0.7 | 0.8 | 0.9 | 1.0 | 1.1 | 1.2 | 1.3 | 1.4 | 1.5 | 1.6 | 1.7 |

| Temperature rise of the electrical connection framework 2 (K) | | | | | | | | | | | | |
|---|---|---|---|---|---|---|---|---|---|---|---|---|
| 63.0 | 59.5 | 57.6 | 55.7 | 53.1 | 51.5 | 49.4 | 37.7 | 33.3 | 30.9 | 28.5 | 27.5 | 27.4 |

As can be seen from Table 5, when the above ratio is less than 1.1%, the temperature rise of the electrical connection framework 2 is unqualified. Therefore, the inventor sets that the ratio of the volume of the cooling medium in the hollow inner cavity 3 to the volume of the hollow inner cavity 3 is greater than 1.1%.

In some embodiments, the cooling medium is a heat-conductive tape, heat-conductive insulation elastic rubber, a flexible heat-conductive pad, a heat-conductive filling agent, or a heat-conductive insulation potting compound. The connector assembly having a solid-state cooling medium can reduce the failure of the electrical connection framework 2 and the connection terminal 7 caused by the high temperature due to electrification, decrease the diameter of the electrical connection framework 2, prolong the service life of the connector 1 and improve the safety of the whole vehicle.

The heat-conductive tape adopts highly heat-conductive rubber as a heat-conductive base material, and is backed with a pressure-sensitive heat-conductive adhesive on one side or both sides, so that the bonding is reliable and the strength is high. The heat-conductive tape is thin and flexible, and it is very easy to fit the surfaces of the device and the radiator. The heat-transfer tape can also adapt to the changes of cold and hot temperatures, thereby ensuring the consistency and stability of the properties.

The heat-conductive insulation elastic rubber adopts silicone rubber as a base material, and ceramic particles such as boron nitride and alumina as a filling agent, so that the heat-conductive effect is very good. Under the same conditions, the heat impedance of the heat-conductive insulation elastic rubber is smaller than those of other heat-conductive materials. The heat-conductive insulation elastic rubber is soft, clean, free of pollution and radiation, and highly insulative. The fiberglass reinforcement provides good mechanical properties, so that the heat-conductive insulation elastic rubber is puncture-resistant, shear-resistant and tear-resistant, and can be backed with the heat-conductive pressure-sensitive adhesive.

The flexible heat-conductive pad is a thick heat-conductive material. The base materials used at present are substantially silicone rubber and foamed rubber. The silicone rubber is characterized by good elasticity, and the foamed rubber is characterized by large deformation range, good heat-conductive effect and higher dielectric strength level.

The heat-conductive filling agent is a filler added to the base material to increase the heat conductivity coefficient of the material. The conventional heat-conductive filler includes aluminum oxide, magnesium oxide, zinc oxide, aluminum nitride, boron nitride, silicon carbide, etc.

The heat-conductive potting compound is an electronic glue mainly made of silicone rubber. The heat-conductive potting compound has excellent resistance to high and low temperatures, maintains elasticity in a temperature range of -60 °C to 200 °C, and effectively increases the waterproof and anti-seismic function of an electronic device after potting to ensure the application reliability of the electronic device.

In some embodiments, the cooling medium is disposed on the outer periphery of the electrical connection framework 2 by means of injection molding, extrusion molding, dipping molding, foaming, winding, weaving, pouring or wrapping.

The injection molding refers to a process of making a semi-finished part with a certain shape by operations such as pressurization, injection, cooling and separation of molten raw materials.

The extrusion molding is an efficient, continuous and low-cost molding processing method, which is an early technology in the processing of polymer materials. The extrusion molding is a molding processing method with the most varieties, the largest changes, high productivity, strong adaptability, wide uses and the largest proportion of output in the field of polymer processing.

The dipping molding refers to a process in which a workpiece is heated to a certain temperature, then dipping it into a dipping solution so that the dipping solution is solidified on the workpiece.

The foaming refers to the formation of a honeycomb or porous structure through the addition and reaction of physical or chemical foaming agents during foaming molding or in a foaming polymer material. The basic steps of the foam molding are the formation, the growth or expansion, and the stabilization of bubble nuclei. Under the given temperature and pressure, the solubility of the gas decreases until the saturation, thereby allowing excess gas to be removed and bubbles to be formed, thereby achieving nucleation.

The winding is to directly wind the heat-conductive tape around the outer periphery of the electrical connection framework 2.

The weaving is to organize a plurality of strip-shaped cooling media by interlacing or hooking them with each other, and fill them between the electrical connection framework 2 and the shielding layer (also called protective shell) 5.

The pouring is to pour the unformed cooling medium between the electrical connection framework 2 and the shielding layer (also called protective shell) 5 and wait for solidification.

The wrapping is to wrap the whole heat-conductive tape around the outer periphery of the electrical connection framework 2.

According to the invention, the cooling medium is unevenly distributed in the hollow inner cavity 3. In the space of the vehicle body, different positions generate different amounts of heat, and at positions that need better heat dissipation, more cooling medium should be filled, e.g. between the outer wall of the electrical connection framework 2 and the inner wall of the protective shell. According to the invention, when the electrical connection framework 2 is bent, the bent portion generates more heat, so that more cooling medium needs to be filled; and at a straight portion of the electrical connection framework that generates less heat, less and optionally even no cooling medium is be filled, thereby decreasing the weight of the connector assembly, reducing the consumption of the cooling medium and saving the cost.

In some embodiments, the cooling medium contains one or more selected from the group consisting of quartz glass, silicon carbide, mica, sand and gravel, diamond, silicon, graphene and derivatives thereof and silicone grease. The type of the cooling medium may be selected as needed.

Quartz glass is made by melting various pure natural quartz (e.g., crystal, quartz sand, etc.).

Silicon carbide is an inorganic substance with a chemical formula of SiC, which is made of raw materials such as quartz sand, petroleum coke (or coal coke), sawdust (salt is needed when producing green silicon carbide) through high temperature smelting in a resistance furnace.

Mica is a rock-forming mineral, which presents a hexagonal flaky crystal form and is one of the main rock-forming minerals.

Sand and gravel refer to a loose mixture of sand and gravel.

Diamond is a mineral composed of carbon, and it is the hardest natural substance in nature. Graphite can form synthetic diamond at a high temperature and a high pressure.

Silicon mainly exists in the form of oxides and silicates with high melting points, and it is also a material for semiconductors.

Graphene is a new material with a monolayer two-dimensional honeycomb lattice structure in which carbon atoms connected by sp² hybridization are closely packed.

Silicone grease is refined from silicone oil as a base oil thickening inorganic thickener, and it has good sealability, waterproofness, solvent resistance and creepage resistance.

The present disclosure further provides a vehicle including the connector assembly having a solid-state cooling medium as described above.

Although some specific embodiments of the present disclosure have been described in detail by examples, it should be understood by those skilled in the art that the above examples are only for illustration rather than limiting the scope of the present disclosure.

Modifications to these embodiments are possible as long as they fall within the scope of the appended claims.

## Claims

1. A connector assembly having a solid-state cooling medium, comprising at least one electrical connection framework (2), connectors, and the solid-state cooling medium being in a solid or semi-solid state and having a heat-conductive property, wherein the connectors comprise connection terminals (7), two ends of the electrical connection framework (2) are electrically connected to the connection terminals (7) respectively, and
the electrical connection framework (2) comprises a rigid hollow conductor; wherein
the rigid hollow conductor is provided with at least one hollow inner cavity (3) which is at least partially filled with the solid-state cooling medium, and the solid-state cooling medium is in direct contact with the electrical connection framework,
the electrical connection framework comprises a bent portion and a straight portion, **characterized in that** a percentage of a volume of the solid-state cooling medium in the hollow inner cavity (3) of the straight portion relative to a volume of the hollow inner cavity (3) of the straight portion is less than a percentage of a volume of the cooling medium in the hollow inner cavity (3) of the bent portion relative to a volume of the hollow inner cavity (3) of the bent portion.

2. The connector assembly having a solid-state cooling medium according to claim 1, wherein the electrical connection framework is electrically connected to the connection terminal (7) by means of welding or crimping.

3. The connector assembly having a solid-state cooling medium according to claim 1, wherein when the electrical connection framework is provided with one hollow inner cavity (3), the hollow conductor has a uniform wall thickness; or
a cross-sectional area of the hollow conductor is 0.3 mm² to 240 mm².

4. The connector assembly having a solid-state cooling medium according to claim 1, wherein a sum of cross-sectional area of the at least one hollow inner cavity (3) accounts for 3.7% to 85% of a cross-sectional area of a circumscribed circle of the electrical connection framework.

5. The connector assembly having a solid-state cooling medium according to claim 1, wherein the connector further comprises a shielding inner shell (4) for shielding against electromagnetic interference, and the shielding inner shell (4) is made of a material containing electrically conductive material.

6. The connector assembly having a solid-state cooling medium according to claim 5, wherein the shielding inner shell (4) is made of a material containing metal or conductive plastic cement.

7. The connector assembly having a solid-state cooling medium according to claim 5, wherein a transfer impedance of the shielding inner shell (4) is less than 100 mΩ.

8. The connector assembly having a solid-state cooling medium according to claim 1, wherein an outer periphery of the hollow conductor is sleeved with an insulation layer (14).

9. The connector assembly having a solid-state cooling medium according to claim 5, wherein an outer periphery of the hollow conductor is sleeved with an insulation layer (14), and an outer periphery of the insulation layer (14) is further sleeved with a shielding layer (5) and an outer insulation layer (13).

10. The connector assembly having a solid-state cooling medium according to claim 9, wherein the shielding layer (5) is electrically connected to the shielding inner shell (4).

11. The connector assembly having a solid-state cooling medium according to claim 1, wherein a volume of the cooling medium in the hollow inner cavity (3) accounts for more than 1.1% of a volume of the hollow inner cavity (3).

12. The connector assembly having a solid-state cooling medium according to claim 1, wherein the solid-state cooling medium is a heat-conductive tape, a heat-conductive insulation elastic rubber, a flexible heat-conductive pad, a heat-conductive filling agent or a heat-conductive insulation potting compound; or
the cooling medium contains one or more selected from the group consisting of quartz glass, silicon carbide, mica, sand and gravel, diamond, silicon, graphene, or silicone grease.

13. The connector assembly having a solid-state cooling medium according to claim 1, wherein one of the connectors is a charging cradle.

14. The connector assembly having a solid-state cooling medium according to claim 1, wherein a partial region of the electrical connection framework is flexible.

15. A vehicle, comprising the connector assembly having a solid-state cooling medium according to any one of claims 1 to 14.

## Patentansprüche

1. Verbinderanordnung mit einem Festkörper-Kühlmedium, aufweisend mindestens ein elektrisches Verbindungsgerüst (2), Verbinder und das Festkörper-Kühlmedium, das sich in einem festen oder halbfesten Zustand befindet und eine Wärmeleitfähigkeit aufweist, wobei die Verbinder Anschlusspole (7) aufweisen, zwei Enden des elektrischen Verbindungsgerüsts (2) jeweils elektrisch mit den Anschlusspolen (7) verbunden sind und
das elektrische Verbindungsgerüst (2) einen starren Hohlleiter aufweist;
wobei der starre Hohlleiter mit mindestens einem inneren Hohlraum (3) versehen ist, der zumindest teilweise mit dem Festkörper-Kühlmedium gefüllt ist, und das Festkörper-Kühlmedium in direktem Kontakt mit dem elektrischen Verbindungsgerüst steht, das elektrische Verbindungsgerüst einen gebogenen Abschnitt und einen geraden Abschnitt aufweist,
**dadurch gekennzeichnet, dass**
ein prozentualer Anteil des Volumens des Festkörper-Kühlmediums im inneren Hohlraum (3) des geraden Abschnitts im Verhältnis zum Volumen des inneren Hohlraums (3) des geraden Abschnitts kleiner ist als ein prozentualer Anteil des Volumens des Kühlmediums im inneren Hohlraum (3) des gebogenen Abschnitts im Verhältnis zum Volumen des inneren Hohlraums (3) des gebogenen Abschnitts.

2. Verbinderanordnung mit einem Festkörper-Kühlmedium nach Anspruch 1, bei der das elektrische Verbindungsgerüst mittels Schweißen oder Crimpen elektrisch mit dem Anschlusspol (7) verbunden ist.

3. Verbinderanordnung mit einem Festkörper-Kühlmedium nach Anspruch 1, bei der, wenn das elektrische Verbindungsgerüst mit einem inneren Hohlraum (3) versehen ist, der Hohlleiter eine gleichmäßige Wandstärke aufweist; oder
die Querschnittsfläche des Hohlleiters 0,3 mm² bis 240 mm² beträgt.

4. Verbinderanordnung mit einem Festkörper-Kühlmedium nach Anspruch 1, bei der die Summe der Querschnittsflächen des mindestens einen inneren Hohlraums (3) 3,7 % bis 85 % der Querschnittsfläche eines Umkreises des elektrischen Verbindungsgerüsts ausmacht.

5. Verbinderanordnung mit einem Festkörper-Kühlmedium nach Anspruch 1, bei der der Verbinder des Weiteren eine abschirmende Innenhülle (4) zum Schutz vor elektromagnetischen Störungen aufweist und die abschirmende Innenhülle (4) aus einem Material besteht, das elektrisch leitfähiges Material enthält.

6. Verbinderanordnung mit einem Festkörper-Kühlmedium nach Anspruch 5, bei der die abschirmende Innenhülle (4) aus einem Material besteht, das Metall oder leitfähigen Kunststoffzement enthält.

7. Verbinderanordnung mit einem Festkörper-Kühlmedium nach Anspruch 5, bei der eine Übertragungsimpedanz der abschirmenden Innenhülle (4) weniger als 100 mΩ beträgt.

8. Verbinderanordnung mit einem Festkörper-Kühlmedium nach Anspruch 1, bei der ein Außenumfang des Hohlleiters mit einer Isolierschicht (14) ummantelt ist.

9. Verbinderanordnung mit einem Festkörper-Kühlmedium gemäß Anspruch 5, bei der ein Außenumfang des Hohlleiters mit einer Isolierschicht (14) ummantelt ist und ein Außenumfang der Isolierschicht (14) des Weiteren mit einer Abschirmschicht (5) und einer äußeren Isolierschicht (13) ummantelt ist.

10. Verbinderanordnung mit einem Festkörper-Kühlmedium gemäß Anspruch 9, bei der die Abschirmschicht (5) elektrisch mit der abschirmende Innenhülle (4) verbunden ist.

11. Verbinderanordnung mit einem Festkörper-Kühlmedium gemäß Anspruch 1, bei der ein Volumen des Kühlmediums in dem inneren Hohlraum (3) mehr als 1,1 % des Volumens des inneren Hohlraums (3) ausmacht.

12. Verbinderanordnung mit einem Festkörper-Kühlmedium gemäß Anspruch 1, bei der das Festkörper-Kühlmedium ein wärmeleitendes Band, ein wärmeleitender, isolierender, elastischer Gummi, ein flexibles wärmeleitendes Polster, ein wärmeleitendes Füllmittel oder eine wärmeleitende Isoliervergussmasse ist; oder
das Kühlmedium einen oder mehrere Stoffe enthält, die aus der Gruppe ausgewählt sind, bestehend aus Quarzglas, Siliziumkarbid, Glimmer, Sand und Kies, Diamant, Silizium, Graphen oder Silikonfett.

13. Verbinderanordnung mit einem Festkörper-Kühlmedium gemäß Anspruch 1, bei der einer der Verbinder eine Ladestation ist.

14. Verbinderanordnung mit einem Festkörper-Kühlmedium gemäß Anspruch 1, bei der ein Teilbereich des elektrischen Verbindungsgerüsts flexibel ist.

15. Fahrzeug, das die Verbinderanordnung mit einem Festkörper-Kühlmedium gemäß einem der Ansprüche 1 bis 14 umfasst.

## Revendications

1. Ensemble de connecteurs avec un milieu de refroidissement à l'état solide, comprenant au moins une structure de connexion électrique (2), des connecteurs et ledit milieu de refroidissement à l'état solide, qui se trouve à l'état solide ou semi-solide et présente une conductivité thermique, les connecteurs comportant des bornes (7), les deux extrémités de la structure de connexion électrique (2) étant respectivement reliées électriquement aux bornes (7) et
la structure de connexion électrique (2) comprend un guide d'ondes rigide;
le guide d'ondes rigide étant pourvu d'au moins une cavité interne (3) qui est remplie au moins partiellement par le milieu de refroidissement à l'état solide, et le milieu de refroidissement à l'état solide étant en contact direct avec la structure de connexion électrique, la structure de connexion électrique comportant une partie courbe et une partie droite,
**caractérisé en ce que**
le pourcentage du volume du milieu de refroidissement à l'état solide dans la cavité interne (3) de la partie droite, rapporté au volume de la cavité interne (3) de la partie droite, est inférieur au pourcentage du volume du milieu de refroidissement dans la cavité interne (3) de la partie courbée par rapport au volume de la cavité interne (3) de la partie courbée.

2. Ensemble de connecteurs avec un milieu de refroidissement à l'état solide selon la revendication 1, dans lequel la structure de connexion électrique est reliée électriquement à la borne (7) par soudage ou sertissage.

3. Ensemble de connecteurs avec un milieu de refroidissement à l'état solide selon la revendication 1, dans lequel, lorsque la structure de connexion électrique est pourvue d'une cavité interne (3), le guide d'ondes présente une épaisseur de paroi uniforme; ou
la section transversale du guide d'ondes est comprise entre 0,3 mm² et 240 mm².

4. Ensemble de connecteurs avec un milieu de refroidissement à l'état solide selon la revendication 1, dans lequel la somme des surfaces de section transversale de la au moins une cavité interne (3) représente entre 3,7 % et 85 % de la surface de section transversale d'un cercle circonscrit à la structure de connexion électrique.

5. Ensemble de connecteurs avec un milieu de refroidissement à l'état solide selon la revendication 1, dans lequel le connecteur comporte en outre une enveloppe interne de blindage (4) destinée à protéger contre les perturbations électromagnétiques, et ladite enveloppe interne de blindage (4) est constituée d'un matériau contenant un matériau électriquement conducteur.

6. Ensemble de connecteurs avec un milieu de refroidissement à l'état solide selon la revendication 5, dans lequel l'enveloppe interne de blindage (4) est constituée d'un matériau contenant du métal ou du ciment plastique conducteur.

7. Ensemble de connecteurs avec un milieu de refroidissement à l'état solide selon la revendication 5, dans lequel l'impédance de transmission l'enveloppe interne de blindage (4) est inférieure à 100 mΩ.

8. Ensemble de connecteurs avec un milieu de refroidissement à l'état solide selon la revendication 1, dans lequel une périphérie extérieure du guide d'ondes est recouverte d'une couche isolante (14).

9. Ensemble de connecteurs avec un milieu de refroidissement à l'état solide selon la revendication 5, dans lequel une périphérie extérieure du guide d'ondes est recouverte d'une couche isolante (14) et une périphérie extérieure de la couche isolante (14) est en outre recouverte d'une couche de blindage (5) et d'une couche isolante extérieure (13).

10. Ensemble de connecteurs avec un milieu de refroidissement à l'état solide selon la revendication 9, dans lequel la couche de blindage (5) est reliée électriquement à l'enveloppe interne de blindage (4).

11. Ensemble de connecteurs avec un milieu de refroidissement à l'état solide selon la revendication 1, dans lequel le volume du milieu de refroidissement dans la cavité interne (3) représente plus de 1,1 % du volume de la cavité interne (3).

12. Ensemble de connecteurs avec un milieu de refroidissement à l'état solide selon la revendication 1, dans lequel le milieu de refroidissement à l'état solide est une bande thermoconductrice, un caoutchouc élastique isolant et thermoconducteur, un rembourrage flexible thermoconducteur, une charge thermoconductrice ou une masse de scellement isolante thermoconductrice; ou
le milieu de refroidissement contient une ou plusieurs substances choisies parmi le groupe constitué du verre de quartz, du carbure de silicium, du mica, du sable et du gravier, du diamant, du silicium, du graphène ou de la graisse de silicone.

13. Ensemble de connecteurs avec un milieu de refroidissement à l'état solide selon la revendication 1, dans lequel l'un des connecteurs est une station de recharge.

14. Ensemble de connecteurs avec un milieu de refroidissement à l'état solide selon la revendication 1, dans lequel une partie de la structure de connexion électrique est flexible.

15. Véhicule comprenant l'ensemble de connecteurs avec un milieu de refroidissement à l'état solide selon l'une des revendications 1 à 14.
